# EUROPÄISCHE PATENTSCHRIFT

(11) **EP 1 562 053 B1**
(45) Veröffentlichungstag und Bekanntmachung des Hinweises auf die Patenterteilung: **08.08.2012**
(21) Anmeldenummer: 05100017.2
(22) Anmeldetag: 04.01.2005
(51) Int. Cl.: G01S 3/802, G01V 1/00, G01H 11/08, G01S 15/93

(54) **Einrichtung und Verfahren für die Überwachung der Umgebung eines Kraftfahrzeugs**
Apparatus and method for monitoring the environment of a vehicle
Dispositif et procédé de surveillance de l'environnement d'un véhicule

(30) Priorität: 03.02.2004 DE 102004005421
(43) Veröffentlichungstag der Anmeldung: 10.08.2005
(73) Patentinhaber: ROBERT BOSCH GMBH, 70442 Stuttgart (DE)
(72) Erfinder: Haug, Karsten, 70372 Stuttgart (DE)

(56) Entgegenhaltungen:
- EP-A- 0 871 021
- WO-A-03/012475
- DE-A1- 10 060 017
- DE-A1- 10 234 611
- US-A1- 2002 126 002
- US-A1- 2005 041 819
- PATENT ABSTRACTS OF JAPAN Bd. 1996, Nr. 12, 26. Dezember 1996 (1996-12-26) -& JP 08 202999 A (HONDA MOTOR CO LTD), 9. August 1996 (1996-08-09)

## Beschreibung

### Stand der Technik

Die Erfindung betrifft eine Einrichtung für die Überwachung der Umgebung eines Kraftfahrzeugs nach dem Oberbegriff des unabhängigen Anspruchs 1. Weiterhin betrifft die Erfindung ein Verfahren für die Überwachung der Umgebung eines Kraftfahrzeugs nach dem Oberbegriff des Anspruchs 13. Moderne Kraftfahrzeuge haben durch ihre Bauart und die Integration zahlreicher elektronischer Systeme einen hohen Sicherheitsstandard erreicht. Dies wird durch die abnehmende Anzahl von Verkehrsopfern belegt. Ein nach wie vor nicht befriedigend gelöstes Problem ist die rechtzeitige und zuverlässige Erkennung von fremden Fahrzeugen, die sich in dem Bereich des toten Winkels des eigenen Fahrzeugs befinden. Der als toter Winkel bezeichnete Winkelbereich verminderter Sichtbarkeit ist durch die Bauart des Fahrzeugs bedingt und bisher nur unvollständig mit Rückblickhilfen, wie Innenspiegel und Außenspiegel kompensierbar. Wenn sich ein fremdes Fahrzeug in dem Bereich des toten Winkels des eigenen Fahrzeugs aufhält, kann es von dem Fahrer des Fahrzeugs auch mit großer Aufmerksam nicht erkannt werden, da sie dem Sichtbereich des Fahrers entzogen sind. Dieser Sachverhalt führt immer wieder zu gefährlichen Verkehrssituationen und schweren Unfällen, insbesondere auf mehrspurigen Fahrbahnen, bei denen rechts und links mit der Vorbeifahrt von fremden Fahrzeugen zu rechnen ist. Es wurden bereits optische Systeme mit Videokameras, Lasersystemen oder dergleichen für die Überwachung des toten Winkels vorgeschlagen. Aufgrund der hohen Kosten derartiger Systeme eignen diese sich jedoch allenfalls als Ausrüstung für Fahrzeuge der Ober- und Luxusklasse. Auch der Einsatz von Parkpilot-Sensoren vermag das Problem nicht zu lösen. Diese Sensoren sind zwar kostengünstig, weisen jedoch eine ungenügende Reichweite auf. Weiterhin wurden vielversprechende Versuche mit Radarsystemen unternommen. Abgesehen von dem ebenfalls hohen Preis derartiger Systeme ergibt sich bei diesen zusätzlich das Problem, einen geeigneten zugelassenen Frequenzbereich zu finden. In der älteren Patentanmeldung DE 102 34 611.9 wird als kostengünstigere Alternativlösung bereits ein Verfahren zum Überwachen der Umgebung eines Kfz vorgeschlagen, bei dem Situationsdaten erfasst und ausgewertet werden, wobei die Situationsdaten einzelne Aspekte der Umfeldsituation des Fahrzeugs wiedergeben und wobei zumindest ein Teil der Umgebungsgeräusche des Fahrzeugs erfasst und ausgewertet wird.

Aus DE 100 60 017 A1 sind ein Verfahren und eine Einrichtung zur Bestimmung eines akustischen Signals einer Signalquelle, insbesondere eines akustischen Signals eines Fahrzeugs bekannt, bei dem das akustische Signal mehrkanalig erfasst und anhand einer kombinierten Zeit- und Spektralanalyse ausgewertet wird.

Die WO 03/012475 zeigt eignen Vorschlag zur Realisierung einer Überwachung des Totwinkelbereichs eines Kraftfahrzeugs mittels akusto-elektrischer Wandler.

Dort ist es wesentlich, dass im Heckbereich des Fahrzeugs mehrere Schallsensoren angeordnet sind. Die mit den Schallsensoren verbundene Auswerteeinheit weist Algorithmen auf, die die, Verkehrssituation bewerten, indem sie die erfassten Schallsignale mit Seiten- und/oder Längsabständen der beiden Fahrzeuge in Verbindung bringen. Die drei Sensoren dienen also dazu, die Abstände der beiden Fahrzeuge mit zu erfassen.

Beim Gegenstand der DE 100 60 017 A1 werden mehrere akustische Sensoren 8 eingesetzt, die jeweils einen anderen Empfangskanal darstellen. Ziel des dort beschriebenen Verfahren ist, beispielsweise die Richtung und die Art der Annäherung der erfassten Signalquelle zu bestimmen.

Die Patent Abstracts of Japan, JP 08-202999 A, zeigen eine Vorgehensweise zur Erfassung und Anzeige der Annäherung an eine Kreuzung. Das Annähern an eine Kreuzung wird dabei aus der Information eines Bildsensors und eines Schallsensors ermittelt.

### Vorteile der Erfindung

Die vorliegende Erfindung befasst sich mit einer weiteren Verbesserung des älteren Vorschlags DE 102 34 611.9.

Die erfindungsgemäße Lösung schlägt dazu eine vergleichsweise kostengünstige Einrichtung vor, die sich aufgrund ihrer geringeren Kosten für die Ausrüstung praktisch aller Fahrzeugklassen eignet. Trotz dieser vergleichsweise geringen Kosten zeichnet sich die erfindungsgemäße Lösung jedoch durch eine große Zuverlässigkeit aus. Fremde Fahrzeuge in dem Bereich des toten Winkels können zuverlässig erkannt werden. Die Einrichtung ist preisgünstig herstellbar, da bei der einfachsten Ausführungsvariante nur ein einziger akusto-elektrischer Wandler und ein Steuergerät vorgesehen sind, das die erfassten akustischen Signale und die Geschwindigkeit des eigenen Fahrzeugs auswertet. Die Einrichtung zeichnet sich weiter durch große Robustheit aus, da Amplituden- und Frequenzinformationen ausgenutzt werden, die modellbasiert miteinander korreliert werden. Es wird keine Abstandsinformation explizit bestimmt, da diese für ein warnendes System nicht unbedingt nötig ist. Stattdessen wird der Messbereich, der dem zu überwachenden Totwinkelbereich entspricht durch die Richtcharakteristik des akusto-elektrischen Wandlers und die Wahl der Parameter des Auswerteverfahrens vorgegeben. Wichtig ist ja nur, ob sich ein Fahrzeug im toten Winkel befmdet, nicht wo es sich exakt in diesem befindet. Eine Abstandsinformation kann aus der modellbasierten Korrelation oder durch Einsatz eines zweiten akusto-elektrischen Wandlers abgeleitet werden.

Da alle sich bewegenden Fahrzeuge Abroll- und Windgeräusche verursachen (auch Motorräder und Fahrzeuge mit abgestelltem Motor), ist eine sichere Detektion gewährleistet. Die Detektionssicherheit kann bei höheren Geschwindigkeiten (z.B. Autobahnfahrt) höher sein als bei niedrigen Geschwindigkeiten (Stadtverkehr). Für den Einsatz im Stadtverkehr, der durch eine vergleichsweise niedrige Geschwindigkeit und Stop and Go-Verkehr gekennzeichnet ist, kann deshalb eine Kombination mit Ultraschall-Parkpilot-Sensoren sinnvoll sein. Dies passt auch gut zusammen, da die genannten Sensoren nur eine vergleichsweise kurze Reichweite aufweisen und daher bei den für Fernstraßen üblichen Geschwindigkeiten und großen Fahrzeugabständen nur begrenzt anwendbar sind.

### Zeichnung

Ausführungsbeispiele der Erfindung werden nachfolgend unter Bezug auf die Zeichnung näher erläutert. Dabei zeigt
- Figur 1: eine Aufsicht auf eine Fahrbahn mit Fahrzeugen;
- Figur 2: ein erstes Ausführungsbeispiel einer erfindungsgemäßen Einrichtung;
- Figur 3: ein zweites Ausführungsbeispiel einer erfindungsgemäßen Einrichtung;
- Figur 4: ein drittes Ausführungsbeispiel einer erfindungsgemäßen Einrichtung.

### Beschreibung der Ausführungsbeispiele

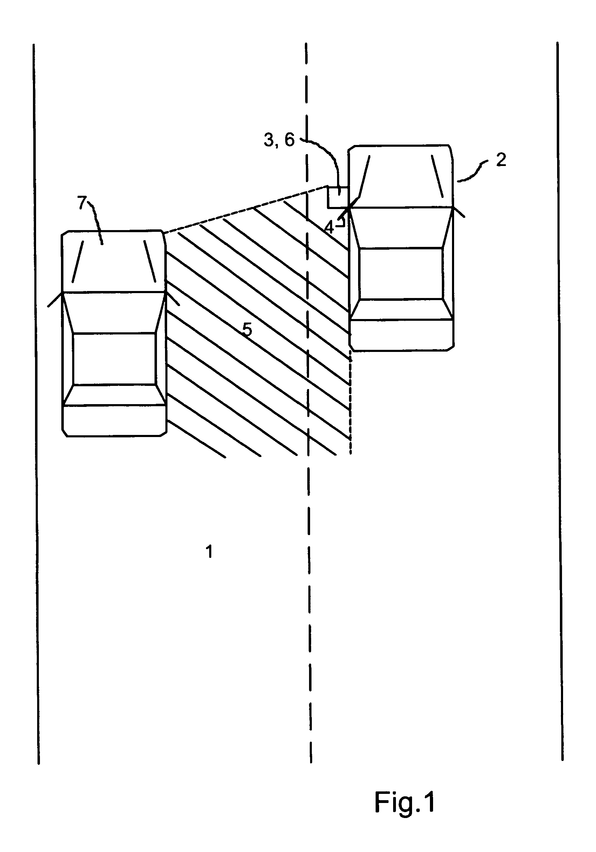

Figur 1 zeigt eine zweispurige Fahrbahn 1 in Draufsicht. Auf der rechten Fahrspur fährt ein Fahrzeug 2, das mit einem erfindungsgemäß ausgebildeten System für die Überwachung des toten Winkels ausgestattet ist. Der tote Winkel ist in Figur 1 als Umgebungssegment 5 angedeutet. In Figur 1 ist nur der tote Winkel auf der linken Seite des Fahrzeugs 2 dargestellt. Eine analoge Betrachtung gilt selbstverständlich auch für die rechte Seite des Fahrzeugs 2. Um das Umgebungssegment 5 akustisch zu überwachen, ist an dem Fahrzeug 2 ein akusto-elektrischer Wandler 3,6 derart angeordnet, dass seine Empfindlichkeitscharakteristik im Wesentlichen das den toten Winkel darstellende Umgebungssegment 5 überdeckt. Besonders zweckmäßig kann eine Anordnung des akusto-elektrischen Wandlers 3, 6 in dem Heckbereich des Fahrzeugs 2 sein. Als akusto-elektrischer Wandler kann zweckmäßig ein Richtmikrofon eingesetzt werden, dessen Richtcharakteristik auf den bevorzugten Überwachungsbereich, also das Umgebungssegment 5, abgestimmt ist. Auf der linken Fahrspur der Fahrbahn 1 fahrend hat sich ein fremdes Fahrzeug 7 genähert, das gerade zum Überholen des Fahrzeugs 2 ansetzt. In der hier dargestellten Situation befindet sich das Fahrzeug 7 in dem Umgebungssegment 5 des Fahrzeugs 2, also im toten Winkel des Fahrers des Fahrzeugs 2. Deshalb kann der Fahrer des Fahrzeugs 2 das Fahrzeug 7 nicht ohne weiteres über den linken Außenspiegel oder den Rückspiegel wahrnehmen.

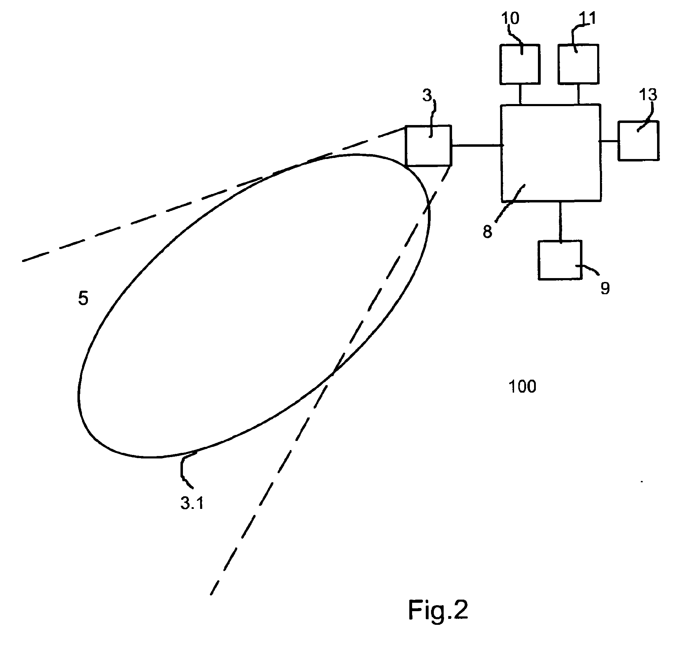

Anhand von Figur 2 wird nun ein erstes Ausführungsbeispiel einer erfindungsgemäßen Einrichtung 100 näher erläutert. Diese Einrichtung 100 ist beispielsweise in dem Fahrzeug 2 von Figur 1 angeordnet. Das Fahrzeug ist jedoch in Figur 2 nicht mehr dargestellt. Die Einrichtung 100 umfasst einen akusto-elektrischen Wandler 3. Die Empfindlichkeitscharakteristik dieses akusto-elektrischen Wandlers ist mit 3.1 bezeichnet. Der akusto-elektrische Wandler 3 ist derart ausgerichtet, dass seine Empfmdlichkeitscharakteristik das dem Bereich des toten Winkels entsprechende Umgebungssegment 5 im Wesentlichen überdeckt. Der akusto-elektrische Wandler 3 ist mit einem Steuergerät 8 verbunden. Das Steuergerät 9 ist mit einem Sensor 9 verbunden. Weiterhin ist das Steuergerät 8 mit einem Speichermittel 13 verbunden. Weiterhin ist das Steuergerät 8 mit Steuermitteln 11 verbunden. Schließlich ist das Steuergerät 8 noch mit Signalmitteln 10 verbunden.

Im Folgenden wird die Funktionsweise der in Figur 2 dargestellten Einrichtung beschrieben. Der akusto-elektrische Wandler 3 nimmt akustische Signale aus der Umgebung des Fahrzeugs 2 auf und wandelt diese in elektrische Signale um. Diese Signale werden dem Steuergerät 8 zur Signalverarbeitung zugeführt. Weiterhin werden dem Steuergerät 8 Signale über die Geschwindigkeit des Fahrzeugs 2 zugeleitet. Dies erfolgt entweder über einen eigens dafür vorgesehenen Sensor 9. Alternativ kann die Geschwindigkeitsinformation auch über eine entsprechende Schnittstelle eines Bus-Systems, insbesondere eines CAN-BUS-Systems bereitgestellt werden, sofern das Fahrzeug 2 mit einem derartigen Bus-System ausgestattet ist. (z.B. über CAN). Zusätzlich können dem Steuergerät 8 weitere Betriebskenngrößen des Fahrzeugs 2, wie insbesondere die Motordrehzahl und der gewählte Gang bzw. die gewählte Automatikschaltstufe über ein Bus-System zugeführt werden, um die akustischen Verhältnisse des eigenen Fahrzeugs 2 genauer charakterisieren zu können. Das von dem akusto-elektrischen Wandler 3 bereitgestellte Signal wird in dem Steuergerät 8 einer Frequenzanalyse unterzogen. Aus der Eigengeschwindigkeit wird mittels eines Fahrzeugsmodells des eigenen Fahrzeugs (Eigenfahrzeugmodell) das akustische Spektrum des eigenen Fahrzeugs (Eigenspektrum) bestimmt (zum Beispiel über eine Fast-Fourier-Transformation) und von dem Gesamtspektrum abgezogen. Damit bleibt nur noch das Umgebungsspektrum übrig. Das Eigenspektrum für verschiedene Betriebszustände des Fahrzeugs kann durch langes zeitliches Mitteln des Gesamtspektrums online gewonnen oder gezielt für ein individuelles Fahrzeug vorab bestimmt werden. Ein vorab bestimmtes Eigenspektrum wird zweckmäßig in einem Speichermittel 13 abgelegt, auf das das Steuergerät 8 zugreift. Besonders gute Ergebnisse werden auch durch eine Kombination der genannten Maßnahmen erreicht. So kann ein Eigenspektrum für das Fahrzeug 2 vorab bestimmt und in dem Speichermittel 13 gespeichert werden. Während des Fahrbetriebs wird dann eine Aktualisierung der gespeicherten Daten durchgeführt. Dadurch können dann Änderungen des Eigenspektrums berücksichtigt werden, die sich beispielsweise durch neue Reifen oder einen zusätzlich montierten Dachträger ergeben. Der Einfluss des Eigenspektrums auf das Gesamtspektrum kann durch günstige Wahl des Anbringungspunkts des akusto-elektrischen Wandlers, gute akustische Entkopplung und eine günstig gewählte Empfindlichkeitscharakteristik und deren zweckentsprechende Ausrichtung auf das Umgebungssegment 5 minimiert werden.

Bei der akustischen Überwachung des Umgebungssegments 5 wird nun in dem Umgebungsspektrum nach anderen Fahrzeugen gesucht, die möglicherweise für den Fahrer des Fahrzeugs 2 gerade nicht sichtbar sind, weil sie sich in dem toten Winkel aufhalten. Hierbei werden die Amplitude und der Frequenzverlauf der von dem akusto-elektrischen Wandler 3 aufgenommenen akustischen Signale in ihrem zeitlichen Verlauf ausgewertet sobald ein vorgebbarer Schwellwert der Amplitude überschritten ist. Hintergrund ist, dass ein sich von hinten annäherndes Fahrzeug 7 immer lauter wird und sich seine Frequenz nach dem Doppler-Effekt in Abhängigkeit zu seiner Relativgeschwindigkeit ändert. Diese beiden Effekte (Amplitudenverlauf und Frequenz) sind miteinander korreliert. Die Suche nach anderen Fahrzeugen 7 erfolgt daher durch modellbasierte Korrelationsverfahren zwischen aufeinanderfolgenden Spektren (Korrelationstracking). Aufgrund des Dopplereffekts und des zeitlichen Amplitudenverlaufs können entgegenkommende Fahrzeuge von überholenden Fahrzeugen unterschieden werden. Gleiches gilt für stehende Objekte. Die Suche im Spektrum kann deshalb auf einen Bereich um die der Eigengeschwindigkeit des Fahrzeugs 2 entsprechende Frequenz eingeschränkt werden. Durch diese Einschränkung kann der gewünschte Geschwindigkeitsbereich (z.B. plus/minus 25 km/h bei etwa 50 km/h Eigengeschwindigkeit) für die Überwachung des dem toten Winkel entsprechenden Umgebungssegments 5 gewählt werden. Dieses Geschwindigkeitsintervall kann in Abhängigkeit von der Geschwindigkeit des eigenen Fahrzeugs gewählt werden.
Besonders gut kann die Frequenzänderung bei dem Übergang von Annäherung auf Entfernung beobachtet werden ("Dopplersprung"). Zweckmäßig wählt man daher die akustische Auslegung der Einrichtung derart, dass dieser Übergang genau in dem kritischen Umgebungssegment 5 des toten Winkels stattfindet, also im Wesentlichen schräg neben dem eigenen Fahrzeug 2. Dort ist das größte Risiko einer Kollision gegeben. Dadurch wird eine besonders hohe Sicherheit erreicht, weil dieser Frequenzsprung besonders gut zu detektieren ist. Er ist im oben erwähnten Modell für die korrelationsbasierte Suche mit berücksichtigt. Wenn nun ein auf diese Weise ein fremdes Fahrzeug 7 (Fig. 1) in dem Umgebungssegment 5 detektiert wird, das sich also in dem toten Winkel des Fahrzeugs 2 befindet und daher von dem Fahrer des Fahrzeugs 2 nicht sichtbar ist, kann das Steuergerät 8 Signalmittel 10 steuern, die ein Warnsignal abgeben. Hierbei kann es sich um akustische, optische und/oder haptische Signale handeln, die den Fahrer des Fahrzeugs 2 auf ein fremdes Fahrzeug in dem toten Winkel und eine ggf. davon ausgehende Gefahr hinweisen. So kann beispielsweise der Fahrer des Fahrzeugs 2 rechtzeitig vor einem eventuell geplanten Spurwechsel gewarnt werden. Auf Basis des Korrelationstrackings lassen sich Aussagen über die Annäherungsgeschwindigkeit eines überholenden Fahrzeugs gewinnen. Diese können in die Warnstrategie einbezogen werden. In einer vorteilhaften Weiterbildung der Erfmdung kann das Steuergerät 8 auch Steuermittel 11 steuern, die in die Lenkung des Fahrzeugs 2 eingreifen und bei einer ggf. drohenden Kollision mit dem fremden Fahrzeug 7 eine Kurskorrektur des Fahrzeugs 2 bewirken. Zusätzlich kann auch ein Eingriff des Steuergeräts 8 in das Motormanagement und die Bremse des Fahrzeugs 2 in Betracht kommen. Durch kurzzeitiges Verlangsamen oder Beschleunigen des Fahrzeugs 2 kann eine kritische Situation ebenfalls entschärft werden.

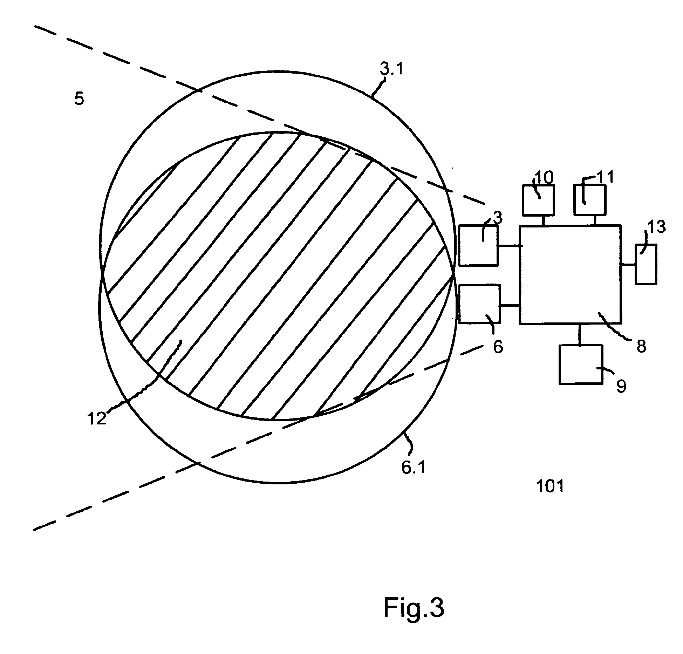

Anhand von Figur 3 wird eine weitere, nicht zur Erfindung gehörende Lösung beschrieben. Wie in Figur 2 zeigt das Blockschaltbild hier ebenfalls nur eine Einrichtung 101 ohne das zugehörige Fahrzeug 2. Bei dieser Einrichtung 101 sind wenigstens zwei akusto-elektrische Wandler 3,6 vorgesehen, deren Empfmdlichkeitscharakteristika 3.1, 6.1 sich höchstens teilweise derart überlagern, dass sie einen Überlappungsbereich 12 bilden. Dieser Überlappungsbereich 12 wird durch entsprechende Anordnung der akusto-elektrischen Wandler 3,6 und die Richtcharakteristik der Empfindlichkeitscharakteristika 3.1, 6.1 der akusto-elektrischen Wandler so gelegt, dass er im Wesentlichen das Umgebungssegment 5, also den Bereich des toten Winkels des Fahrzeugs 2, abdeckt. Die akusto-elektrischen Wandler 3,6 sind wiederum mit einem Steuergerät 8 verbunden. Die übrigen Komponenten der Einrichtung 101 entsprechen jenen der in Figur 2 dargestellten Einrichtung 100. Die Überlagerung der Empfindlichkeitscharakteristika 3.1, 6.1 in dem Umgebungssegment 5 ermöglicht eine noch zuverlässigere Erkennung eines fremden Fahrzeugs 7, das sich in dem toten Winkel des Fahrzeugs 2 aufhält. Die Einrichtung 101 lässt sich zweckmäßig so betreiben, dass ein Warnsignal nur erzeugt wird, wenn die akustische Signatur eines fremden Fahrzeugs 7 aus dem Überlappungsbereich 12, das heißt von beiden akusto-elektrischen Wandlern 3, 6, aufgenommen wird. Die außerhalb des Überlappungsbereichs 12 liegenden Teilbereiche der Empfindlichkeitscharakteristika 3.1, 6.1 dienen zweckmäßig der Erfassung störender Umgebungsgeräusche, die somit auch leichter ausgefiltert werden können, da sie nur von jeweils einem akusto-elektrischen Wandler 3,6 aufgenommen werden. Somit kann auf einfache Weise das näher zu untersuchende akustische Spektrum auf für Fahrzeuge charakteristische Frequenzen eingegrenzt werden, die beispielsweise Abrollgeräusche oder Windgeräusche umfassen.

In einer weiteren Ausführungsvariante der Erfindung kann das Ausgangssignal des akusto-elektrischen Wandlers 3 unmittelbar für Warnzwecke ausgenutzt werden. Plant der Fahrer einen Richtungswechsel und kündigt diesen durch Setzen des Fahrtrichtungsanzeigers an oder lässt der Lenkwinkel des Fahrzeugs auf einen Spurwechsel schließen, während sich ein fremdes Fahrzeug in dem Bereich des toten Winkels dem eigenen Fahrzeug nähert, wird mit dem Ausgangssignal des akusto-elektrischen Wandlers 3 beispielsweise der Lautsprecher des Autoradios zwecks Abgabe eines akustischen Warnsignals gesteuert.

Zweckmäßig ermöglichen bei der Lösung nach Figur 3 die Einrichtungen 100, 101, 102 auch die Erfassung und Analyse eines außerhalb des menschlichen Hörvermögens liegenden Schallspektrums, wenn dies für Fahrzeuge charakteristische Frequenzanteile umfasst. Durch den Einsatz von wenigstens zwei akusto-elektrischen Wandlern 3,6 kann auch die Richtung zu einem fremden Fahrzeug wesentlich genauer bestimmt werden. Zum Schutz der Bereiche des toten Winkels auf beiden Seiten des Fahrzeugs 2 kann je eine Einrichtung 100, 101 für jede Seite des Fahrzeugs 2 vorgesehen werden, die parallel betrieben werden. Bei unübersichtlichen Fahrzeugen, wie beispielsweise Bussen oder NKw, die unter Umständen noch mehr schlecht einsehbare Umgebungssegmente aufweisen, können selbstverständlich auch noch mehrere Einrichtungen 100, 101, 102 vorgesehen sein. In einer Ausführungsvariante der Erfindung können für jeden Erfassungskanal getrennte akusto-elektrische Wandler 3,6 vorgesehen werden, deren Ausgangssignale dann von einem einzigen Steuergerät im Zeitmultiplexbetrieb verarbeitet werden. Alternativ kann ein Steuergerät auch mehrere Kanäle umfassen.

In einer Ausführungsvariante kann die Einrichtung 100, 101 zusätzlich mit einem die Entfernung messenden Sensor, beispielsweise einem Ultraschallsensor ausgestattet sein, um die Detektionssicherheit bei niedrigen Geschwindigkeiten, beispielsweise im Stadtverkehr zu verbessern.

Bei einer weiteren Ausführungsvariante der Erfindung kann nur eine Auswertung der Amplitude ohne zusätzliche FFT (Fast-Fourier-Transformation) vorgesehen sein. Zusätzlich können analoge und/oder digitale Filter vorgesehen sein, so dass auch ohne eine vorherige Transformation in den Frequenzbereich fahrzeugrelevante Spektren, wie beispielsweise durch das Fahrzeug verursachte Wind- oder Abrollgeräusche, selektiert werden können. Diese Vorfilter können in weiteren Ausführungsvarianten auch mit den spektralen Verfahren kombiniert werden.

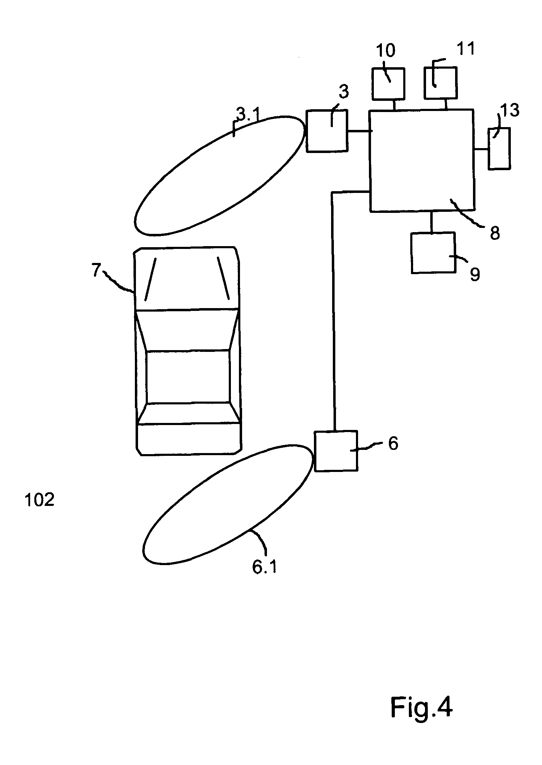

In Figur 4 ist eine weitere, ebenfalls nicht zur Erfindung gehörende Ausführung der Einrichtung 102 dargestellt. Bei dieser Einrichtung 102 sind ebenfalls zwei akusto-elektrische Wandler 3, 6 vorgesehen, die jedoch mit einem möglichst großen Abstand voneinander an dem auch in dieser Figur nicht dargestellten Fahrzeug 2 angeordnet sind. Beispielsweise ist der Sensor 3 in dem Frontbereich des Fahrzeugs 2 angeordnet, während der Sensor 6 sich in dem Heckbereich des Fahrzeugs 2 befindet. Die Empfindlichkeitscharakteristika 3.1 beziehungsweise 6.1 der Sensoren 3 und 6 decken somit Umgebungssegmente in dem Umfeld es Fahrzeugs 2 ab, die einen größeren Abstand voneinander haben. Hierdurch ist eine noch klarere Signaltrennung der von den Sensoren 3 und 6 gelieferten Signale möglich. Bei den zuvor beschriebenen Ausführungsbeispielen kann es unter besonders ungünstigen Umständen zu Mehrdeutigkeiten bei der Annäherung eines Fahrzeugs und dessen Einfahrt in den Bereich des toten Winkels kommen. Beispielsweise kann ein sehr lautes aber noch relativ weit entferntes Fahrzeug ein ähnliches Amplitudendichtespektrum hervorrufen wie en leiseres Fahrzeug 7, das sich schon in dem Bereich des toten Winkels des Fahrzeugs 2 und ggf. auf Kollisionskurs mit diesem befindet. Dadurch kann es zu einem unerwünschten Fehlalarm kommen. Mit der zuvor beschriebenen Einrichtung kann dieser Nachteil weitgehend ausgeschlossen werden. Durch die beschriebene Einrichtung können nämlich mittels der möglichst weit voneinander angeordneten akusto-elektrischen Sensoren 3,6, zwei verschiedenen Messsignale für die unbekannten Größen Lautstärke und Entfernung ermittelt werden.

## Patentansprüche

1. Einrichtung für die Überwachung der Umgebung eines Kraftfahrzeugs (2), die Situationsdaten aus der Umfeldsituation des Kraftfahrzeugs (2), in Form zumindest eines Teils der Umgebungsgeräusche des Fahrzeugs (2) erfasst und auswertet, **dadurch gekennzeichnet, dass** die Einrichtung einen einzigen akusto-elektrischen Wandler (3) mit Richtcharakteristik und ein mit diesem verbundenes Steuergerät (8) aufweist, wobei der einzige akusto-elektrischen Wandler (3) derart an dem Fahrzeug (2) angeordnet ist, dass das Empfindlichkeitsmaximum des einzigen akusto-elektrischen Wandlers (3) wenigstens das Zentrum des dem toten Winkel des Fahrzeugs (2) entsprechenden Winkelbereichs abdeckt, wobei das Steuergerät Amplituden- und Frequenzinformationen des durch den einzigen akusto-elektrischen Wandler (3) erfassten akustischen Signale und die Geschwindigkeit des eigenen Fahrzeugs auswertet, indem der zeitliche Verlauf von Amplitude und Frequenz der durch den einzigen akusto-elektrischen Wandler (3) erfassten akustischen Signale ausgewertet wird, sobald ein vorgebbarer Schwellwert der Amplitude überschritten wird und diese Amplituden-und Frequenzinformationen modellbasiert zwischen aufeinanderfolgenden Frequenzspektren in Form eines Korrelationstrackings miteinander korreliert werden.

2. Einrichtung nach Anspruch 1, **dadurch gekennzeichnet, dass** für jeden Totwinkelbereich des Fahrzeugs ein Steuergerät (8) und jeweils ein einziger damit verbundener akusto-elektrischer Wandler (3,6) vorgesehen ist.

3. Einrichtung nach einem der vorhergehenden Ansprüche, **dadurch gekennzeichnet, dass** der Überschneidungsbereich der Empfindlichkeitscharakteristika der beiden akusto-elektrischen Wandler den Totwinkelbereich des Fahrzeugs im Wesentlichen überdeckt.

4. Einrichtung nach einem der vorhergehenden Ansprüche, **dadurch gekennzeichnet, dass** für die Überwachung des Totwinkelbereichs des Fahrzeugs (2) im Wesentlichen die aus dem Überlappungsbereich der beiden akusto-elektrischen Wandler (3,6) gewonnenen Signale ausgewertet werden.

5. Einrichtung nach einem der vorhergehenden Ansprüche, **dadurch gekennzeichnet, dass** für jeden Totwinkelbereich des Fahrzeugs ein Steuergerät (8) und damit verbundene akusto-elektrische Wandler (3,6) vorgesehen sind.

6. Einrichtung nach einem der vorhergehenden Ansprüche, **dadurch gekennzeichnet, dass** für jeden Totwinkelbereich des Fahrzeugs (2) akusto-elektrische Wandler (3,6) vorgesehen sind, die mit einem einzigen Steuergerät (8) verbunden sind, das die Ausgangssignale der akusto-elektrischen Wandler (3,6) in einem Zeitmultiplexverfahren oder in mehreren Kanälen verarbeitet.

7. Einrichtung nach einem der vorhergehenden Ansprüche, **dadurch gekennzeichnet, dass** die Einrichtung von dem Steuergerät (8) steuerbare Signalmittel (10), Steuermittel (11) und Speichermittel (13)umfasst.

8. Einrichtung nach einem der vorhergehenden Ansprüche, **dadurch gekennzeichnet, dass** die Einrichtung eine Busschnittstelle umfasst.

9. Einrichtung nach einem der vorhergehenden Ansprüche, **dadurch gekennzeichnet, dass** in dem Speichermittel (13) die akustische Signatur des eignen Fahrzeugs gespeichert ist.

10. Einrichtung nach einem der vorhergehenden Ansprüche, **dadurch gekennzeichnet, dass** in dem Speichermittel charakteristische akustische Signaturen von Fremdfahrzeugen gespeichert sind.

11. Einrichtung nach einem der vorhergehenden Ansprüche, **dadurch gekennzeichnet, dass** sie Mittel für die Erfassung von Frequenzänderungen eines aus dem Totwinkelbereich stammenden akustischen Signals umfasst.

12. Einrichtung nach einem der vorhergehenden Ansprüche, **dadurch gekennzeichnet, dass** wenigstens zwei akusto-elektrische Sensoren (3,6) vorgesehen sind, die mit einem möglichst großen Abstand voneinander derart an dem Fahrzeug (2) angeordnet sind, dass sich ihre Empfindlichkeitscharakteristika (3.1, 6.1) nicht überlappen.

13. Verfahren für die Überwachung der Umgebung eines Fahrzeugs, insbesondere seines Totwinkelbereichs, bei dem akustische Signale aus der Umgebung des Fahrzeugs erfasst und ausgewertet werden, **dadurch gekennzeichnet, dass** bei der Auswertung der erfassten akustischen Signale Betriebskenngrößen des eigenen Fahrzeugs, wie insbesondere das akustische Spektrum und die Geschwindigkeit des eignen Fahrzeugs, berücksichtigt werden.

14. Verfahren nach Anspruch 11, **dadurch gekennzeichnet, dass** bei der Auswertung der Umgebungsgeräusche des Fahrzeugs akustische Signale von außerhalb des Totwinkelbereichs unterdrückt werden.

15. Verfahren nach einem der vorhergehenden Ansprüche, **dadurch gekennzeichnet, dass** eine Geschwindigkeitsschwelle für fremde Fahrzeuge derart vorgebbar ist, dass nur akustische Signale von fremden Fahrzeugen berücksichtigt werden, deren Geschwindigkeit in einem vorgebbaren Geschwindigkeitsintervall um die Geschwindigkeit des eigenen Fahrzeugs liegt.

## Claims

1. Apparatus for monitoring the surroundings of a motor vehicle (2), which detects and evaluates situation data from the surrounding situation of the motor vehicle (2) in the form of at least some of the noises from the surroundings of the vehicle (2), **characterized in that** the apparatus has a single acoustic-electrical transducer (3) with a directional characteristic, and a control unit (8) connected thereto, wherein the single acoustic-electric transducer (3) is arranged on the vehicle (2) in such a way that the sensitivity maximum of the single acoustic-electrical transducer (3) covers at least the centre of the angular range corresponding to the blind spot of the vehicle (2), wherein the control unit evaluates amplitude information and frequency information of the acoustic signals detected by the single acoustic-electrical transducer (3) and the speed of the driver's own vehicle by evaluating the time profile of the amplitude and frequency of the acoustic signals detected by the single acoustic-electrical transducer (3), as soon as a predefinable threshold value of the amplitude is exceeded, and these amplitude and frequency information items are correlated with one another in a model-based fashion between successive frequency spectrums in the form of a correlation tracking process.

2. Apparatus according to Claim 1, **characterized in that** a control unit (8) and in each case a single acoustic-electrical transducer (3, 6) which is connected thereto are provided for each blind spot range of the vehicle.

3. Apparatus according to one of the preceding claims, **characterized in that** the overlapping range of the sensitivity characteristics of the two acoustic-electrical transducers substantially covers the blind spot range of the vehicle.

4. Apparatus according to one of the preceding claims, **characterized in that** substantially the signals detected from the overlapping range of the two acoustic-electrical transducers (3, 6) are evaluated for monitoring the blind spot range of the vehicle (2).

5. Apparatus according to one of the preceding claims, **characterized in that** a control unit (8) and acoustic-electrical transducers (3, 6) connected thereto are provided for each blind spot range of the vehicle.

6. Apparatus according to one of the preceding claims, **characterized in that** acoustic-electrical transducers (3, 6) are provided for each blind spot range of the vehicle (2), which acoustic-electrical transducers (3, 6) are connected to a single control unit (8) which processes the output signals of the acoustic-electrical transducers (3, 6) in a time-division multiplex method or in a plurality of channels.

7. Apparatus according to one of the preceding claims, **characterized in that** the apparatus comprises signal means (10), control means (11) and storage means (13) which can be controlled by the control unit (8).

8. Apparatus according to one of the preceding claims, **characterized in that** the apparatus comprises a bus interface.

9. Apparatus according to one of the preceding claims, **characterized in that** the acoustic signature of the driver's own vehicle is stored in the storage means (13).

10. Apparatus according to one of the preceding claims, **characterized in that** characteristic acoustic signatures from other vehicles are stored in the storage means.

11. Apparatus according to one of the preceding claims, **characterized in that** said apparatus comprises means for detecting changes in the frequency of an acoustic signal originating from the blind spot range.

12. Apparatus according to one of the preceding claims, **characterized in that** at least two acoustic-electrical sensors (3, 6) are provided which are arranged at the largest possible distance from one another on the vehicle (2) in such a way that their sensitivity characteristics (3.1, 6.1) do not overlap.

13. Method for monitoring the surroundings of a vehicle, in particular its blind spot range in which acoustic signals from the surroundings of the vehicle are detected and evaluated, **characterized in that** operating characteristic variables of the driver's own vehicle, such as, in particular, the acoustic spectrum and the speed of the driver's own vehicle, are taken into account in the evaluation of the detected acoustic signals.

14. Method according to Claim 11, **characterized in that** acoustic signals from outside the blind spot range are suppressed during the evaluation of the noises from the surroundings of the vehicle.

15. Method according to one of the preceding claims, **characterized in that** a speed threshold for other vehicles can be predefined in such a way that only acoustic signals from other vehicles whose speed lies in a predefinable speed interval about the speed of the driver's own vehicle are taken into account.

## Revendications

1. Dispositif de surveillance de l'environnement d'un véhicule automobile (2) qui détecte et interprète des données de situation issues de la situation d'environnement du véhicule automobile (2) sous la forme d'au moins une partie du bruit ambiant du véhicule (2), **caractérisé en ce que** le dispositif présente un unique transducteur acousto-électrique (3) ayant une caractéristique directionnelle et un contrôleur (8) relié à celui-ci, l'unique transducteur acousto-électrique (3) étant disposé sur le véhicule (2) de telle sorte que le maximum de sensibilité de l'unique transducteur acousto-électrique (3) couvre au moins le centre de la plage angulaire correspondant à l'angle mort du véhicule (2), le contrôleur interprétant les informations d'amplitude et de fréquence des signaux acoustiques détectés par l'unique transducteur acousto-électrique (3) ainsi que la vitesse du véhicule propre en interprétant le tracé dans le temps de l'amplitude et de la fréquence des signaux acoustiques détectés par l'unique transducteur acousto-électrique (3) dès qu'une valeur de seuil pouvant être prédéfinie de l'amplitude est dépassée et ces informations d'amplitude et de fréquence étant corrélées entre elles sous la forme d'un suivi de corrélation en se basant sur un modèle entre des spectres de fréquences successifs.

2. Dispositif selon la revendication 1, **caractérisé en ce que** pour chaque plage d'angle mort du véhicule, il est prévu un contrôleur (8) et à chaque fois un unique transducteur acousto-électrique (3, 6) relié à celui-ci.

3. Dispositif selon l'une des revendications précédentes, **caractérisé en ce que** la plage de chevauchement des caractéristiques de sensibilité des deux transducteurs acousto-électriques couvre pour l'essentiel la plage d'angle mort du véhicule.

4. Dispositif selon l'une des revendications précédentes, **caractérisé en ce que** pour la surveillance de la plage d'angle mort du véhicule (2), ce sont pour l'essentiel les signaux issus de la plage de chevauchement des deux transducteurs acousto-électriques (3, 6) qui sont interprétés.

5. Dispositif selon l'une des revendications précédentes, **caractérisé en ce que** pour chaque plage d'angle mort du véhicule sont prévus un contrôleur (8) et des transducteurs acousto-électriques (3, 6) reliés à celui-ci.

6. Dispositif selon l'une des revendications précédentes, **caractérisé en ce que** pour chaque plage d'angle mort du véhicule (2) sont prévus des transducteurs acousto-électriques (3, 6) qui sont reliés à un unique contrôleur (8), lequel traite les signaux de sortie des transducteurs acousto-électriques (3, 6) dans un procédé de multiplexage temporel ou en plusieurs canaux.

7. Dispositif selon l'une des revendications précédentes, **caractérisé en ce que** le dispositif comprend des moyens de signalisation (10), des moyens de commande (11) et des moyens de mémorisation (13) commandables par le contrôleur (8).

8. Dispositif selon l'une des revendications précédentes, **caractérisé en ce que** le dispositif comprend une interface de bus.

9. Dispositif selon l'une des revendications précédentes, **caractérisé en ce que** la signature acoustique du véhicule propre est enregistrée dans les moyens de mémorisation (13).

10. Dispositif selon l'une des revendications précédentes, **caractérisé en ce que** des signatures acoustiques caractéristiques de véhicules externes sont enregistrées dans les moyens de mémorisation.

11. Dispositif selon l'une des revendications précédentes, **caractérisé en ce qu'**il comprend des moyens de détection des variations de fréquence d'un signal acoustique provenant de la plage d'angle mort.

12. Dispositif selon l'une des revendications précédentes, **caractérisé en ce que** sont prévus au moins deux capteurs acousto-électriques (3, 6), lesquels sont disposés sur le véhicule (2) avec un écart le plus grand possible entre eux, de telle sorte que leurs caractéristiques de sensibilité (3.1, 6.1) ne se chevauchent pas.

13. Procédé de surveillance de l'environnement d'un véhicule, notamment de sa plage d'angle mort, selon lequel des signaux acoustiques provenant de l'environnement du véhicule sont détectés et interprétés, **caractérisé en ce que** des grandeurs opérationnelles du véhicule propre, notamment le spectre acoustique et la vitesse du véhicule propre, sont pris en compte lors de l'interprétation des signaux acoustiques détectés.

14. Procédé selon la revendication 11, **caractérisé en ce que** lors de l'interprétation des bruits ambiants du véhicule, les signaux acoustiques provenant de l'extérieur de la plage d'angle mort sont affaiblis.

15. Procédé selon l'une des revendications précédentes, **caractérisé en ce qu'**il est possible de prédéfinir un seuil de vitesse pour les véhicules externes, de telle sorte que seuls sont pris en compte les signaux acoustiques des véhicules externes dont la vitesse se trouve dans un intervalle de vitesse pouvant être prédéfini autour de la vitesse du véhicule propre.
